# EUROPÄISCHE PATENTANMELDUNG

(11) **EP 1 055 370 A1**
(43) Veröffentlichungstag der Anmeldung: **29.11.2000**
(21) Anmeldenummer: 00250148.4
(22) Anmeldetag: 17.05.2000
(51) Int. Cl.: A22C 13/00

(54) **Umhüllung für Lebensmittel aus einem künstlichen Hüllenmaterial, sowie Verfahren und Vorrichtung zu ihrer Herstellung**

(30) Priorität: 27.05.1999 DE 19925315; 25.06.1999 DE 19934568; 08.09.1999 DE 19942835
(71) Anmelder: IFG Forschungs- und Vertriebsges mbH Für Kybernetik und Elektronik, 21435 Stelle (DE)
(72) Erfinder: Beuttenmüller, Albert, 21435 Stellè (DE); Lavdije, Strefi, Episkopie (GR)
(74) Vertreter: Scholz, Hartmut, Dipl.-Ing. Patentanwalt

(57) **Zusammenfassung**

Wursthülle aus einem künstlichen Wursthüllenmaterial, bei der als Wursthüllenmaterial ein gas- und sauerstoffdurchlässiges, weiches Kunststoffmaterial verwendet wird, das eine unregelmäßig gekrümmte Wurstform (28) mit geschweißten Längsnähten (29, 29a) aufweist. Das gas- und sauerstoffdurchlässige Kunststoffmaterial aus einem Niederdruckpolyethylen ist mit einem Stützmaterial umgeben, welches die gleiche Außenkontur aufweist.

## Beschreibung

Die Erfindung betrifft eine Umhüllung aus einem künstlichen Hüllenmaterial, sowie ein Verfahren und eine Vorrichtung zur Herstellung einer formgebenden Umhüllung für Lebensmittel mit einer unregelmäßigen, naturdarmförmigen äußeren Kontur.

Bekannt sind aus der DE 39 02 347 A1 krumme bzw. gekräuselte Wursthüllen, die in ihren Längsnähten genäht sind. Üblicherweise werden derartige Würsthüllen zunächst auf links genäht, dann umgestülpt und mit der Wurstmasse gefüllt. Problem ist dabei, dass beim Füllen ein Innendruck aufgebaut wird, der die Einstichlöcher der Nähte aufweitet. Dadurch kommt es zu Austretungen der Wurstmasse und zu Kochverlusten, die bis zu 2 - 3 % betragen können. Auch können derartige Würste nicht geräuchert werden, da die künstlichen Wursthüllen praktisch gas- und sauerstoffundurchlässig sind und das Raucharoma am Eindringen hindern.

Es werden auch Zellulose- bzw. Naturfaserdärme, die beispielsweise zellstoff- oder papierbeschichtet sind, verwendet, die sind zwar wasserdampfdurchlässig, zwangsläufig aber auch sauerstoffdurchlässig und können die Wurstmasse nicht ausreichend lange vor dem Verderben bewahren.

Aufgabe der vorliegenden Erfindung ist es, eine künstliche Wursthülle zu schaffen, die räucherbar ist und eine ausreichend hohe Festigkeit aufweist.

Gelöst wird diese Aufgabe durch die Maßnahmen des Anspruchs 1, insbesondere dadurch, dass als Wursthüllenmaterial ein gas- und sauerstoffdurchlässiges, weiches Kunststoffmaterial verwendet wird, das eine unregelmäßig gekrümmte Wurstform mit geschweißten Längsnähten aufweist. Zur Verbesserung der Festigkeit kann das weiche gas- und sauerstoffdurchlässige Kunststoffmaterial mit einem Stützmaterial umgeben sein, welches die gleiche Außenkontur aufweist.

Durch diese Maßnahmen wird zunächst eine Innenwursthülle mit einer naturdarmnahen Außenkontur geschaffen, die aus Niederdruckpolyethylen besteht, gas- und sauerstoffdurchlässig und damit räucherfähig ist. Diese Innenwursthülle besteht aus einer Folie, die ca. 10 bis 50µm stark ist und geschweißt werden kann. Sie weist jedoch keine ausreichende mechanische Festigkeit auf, sprich beim Einpressen der Wurstmasse besteht eine Gefahr, dass sie platzt oder überdehnt wird und die Wurst nicht mit der vorgesehenen Füllmenge befüllt werden kann. Eine derartige Überdehnung ist nicht reversibel und die Wursthülle nimmt ihre ursprüngliche Form nicht wieder an.

Die Innenwursthülle wird mit einem Stützmaterial umgeben. Ein derartiges Stützmaterial aus einer beispielsweise geklebten Folie kann die gleiche Form aufweisen und mit beliebigem Dessin versehen sein. Zum Beispiel Schinken, Saumagen, Kraussdarm. Diese dichte bzw. räucherbare Folie läßt sich auch bei der Herstellung der geklebten Därme mit einfügen, indem man zuerst beide Folien aufeinander legt, zunächst die dünnen Folien schweißt und dann auf der gleichen Schablone die Stützfolie zusammenklebt. Der Kleber kann kalt aufgetragen sein und wird in der Schweißmaschine mit entsprechend beheizbaren Backen thermisch aktiviert. Wobei die dünne Folie nicht mit Kleber beschichtet sein braucht, sie kann direkt geschweißt werden.

Bei einem Verfahren zur Herstellung einer solchen Wursthülle ist es vorgesehen, daß ein quasi endloses doppeltgelegtes, schweißbares Umhüllungsmaterial über eine mit Schweißenergie beaufschlagbare Umhüllungskontur gelegt und mit Anpreßmitteln preßgehalten wird, eine Schweißenergie durch die Umhüllungskontur geleitet wird, das Umhüllungsmaterial im Bereich der Umhüllungskontur zu einem Umhüllungsformteil verschweißt wird und das verschweißte Umhüllungsformteil aus dem verbleibenden Umhüllungsmaterial abgetrennt wird.

Ferner soll eine Vorrichtung zur Durchführung dieses Verfahrens geschaffen werden. Diese Aufgabe wird gelöst durch einen, die Außenkontur der Umhüllung aufweisenden, mit Schweißenergie beaufschlagbaren Schweißkonturdraht, der auf eine Grundplatte aufgelegt ist, über den ein aus einem Obertrum und einem Untertrum bestehende quasi endlose Folienmaterialbahn spannbar und mit einer Anpreßplatte auf den Schweißkonturdraht anpressbar ist.

Durch diese Maßnahmen wird eine Vorrichtung zur Herstellung von Wursthüllen mit einer naturdarinnahen Außenkontur geschaffen, die aus Folienmaterial bestehen. Als Folienmaterial ist Niederdruckpolyethylen geeignet, das gas- und sauerstoffdurchlässig und damit räucherfähig ist. Die Wursthüllen bestehen aus ca. 10 bis 50µm starken Folien, die miteinander verschweißt sind. Sie weisen eine ausreichende mechanische Festigkeit auf, und beim Einpressen der Wurstmasse besteht nicht die Gefahr, dass sie platzen oder überdehnt werden. In eine derartig hergestellte Wursthülle kann die vorgesehene Füllmenge gefüllt werden, ohne dass es zu Überdehnungen kommt.

Um den fertigen Würsten ein der Verbrauchervorstellung entsprechendes Äußeres zu geben, kann es vorgesehen sein, daß die zu verarbeitende Folienmaterialbahn mit einer Dekoration bedruckt ist, oder daß die geschweißte Umhüllung mit einer Textilumhüllung versehbar ist. Die verschweißte Umhüllung kann dabei mit der Textilumhüllung verklebt und die Textilumhüllung bedruckt sein.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- **Figur 1**: die schematische Darstellung einer Wurst mit einer naturdarmförmigen Außenkontur, mit seitlich längsverlaufenden Schweißnähten;
- **Figur 2**: den Schnitt durch eine Vorrichtung zur Herstellung von seitlich längsverlaufenden Schweißnähten für eine Wursthülle mit naturdarmnaher Außenkontur;
- **Figur 3**: den Ausschnitt aus einer Wursthüllenhälfte aus Kunststoffmaterial, mit seitlich überstehenden Kunststoffrändern;
- **Figur 4**: die Draufsicht auf eine Grundplatte einer Vorrichtung zur Herstellung eines eine beliebige Außenkontur aufweisenden Formteils, beispielsweise einer Wursthülle, mit aufgelegtem, freigeformtem Schweißkonturdraht zum Schweißen und Abtrennen des Formteils;
- **Figur 5**: die schematische Darstellung einer Vorrichtung nach Figur 1 in Vorderansicht, mit auf eine Grundplatte aufgelegtem Schweißkonturdraht und Anpreßplatte und einer zwischen Schweißkonturdraht und Anpreßplatte geführter zu verarbeitender, quasi endloser Folienmaterialbahn;
- **Figur 6**: die schematische Darstellung einer fertigen, verschweißten und aus der endlosen Folienmaterialbahn abgetrennten Umhüllung;
- **Figur 7**: den Schnitt durch eine Umhüllung entlang der Linie IV-IV in Figur 6, mit einer zusätzlichen Textilumhüllung und aufgedruckter Dekoration.

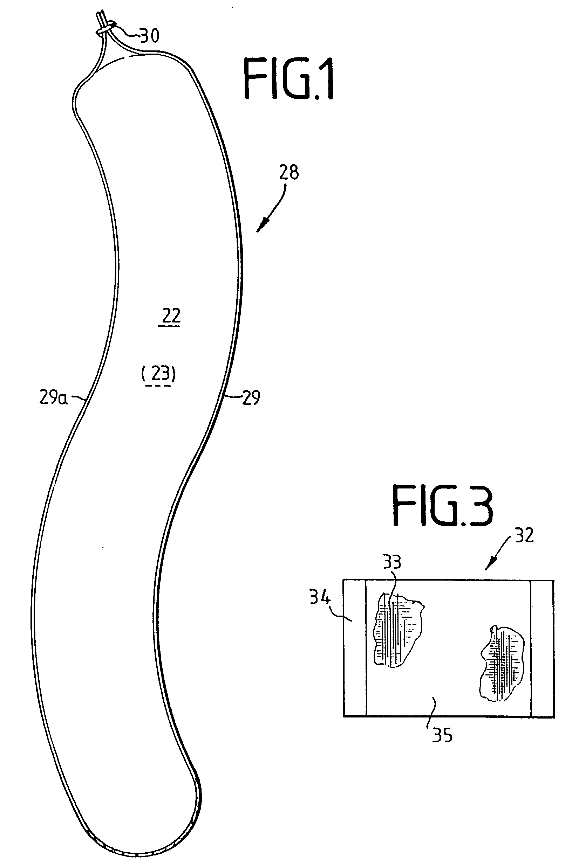

Die in der Figur 1 schematisch dargestellte Wursthülle 28 weist eine naturdarmförmige Außenkontur mit unregelmässigen Wurstdurchmessern und Krümmungen auf. Die Wursthülle 28 besteht aus einer unteren Innenwursthüllenhälfte 22 und einer oberen Innenwursthüllenhälfte 23, die in seitlich längsverlaufenden Schweißnähten 29 und 29a miteinander verbunden sind.

Das eine Ende dieser Wursthülle 28 ist mit einem Verschluss 30 verschließbar, während das gegenüberliegende untere Ende mit einer Quernaht 31 verschlossen werden kann. Die Quernaht 31 kann geklbet, genäht oder geschweißt sein.

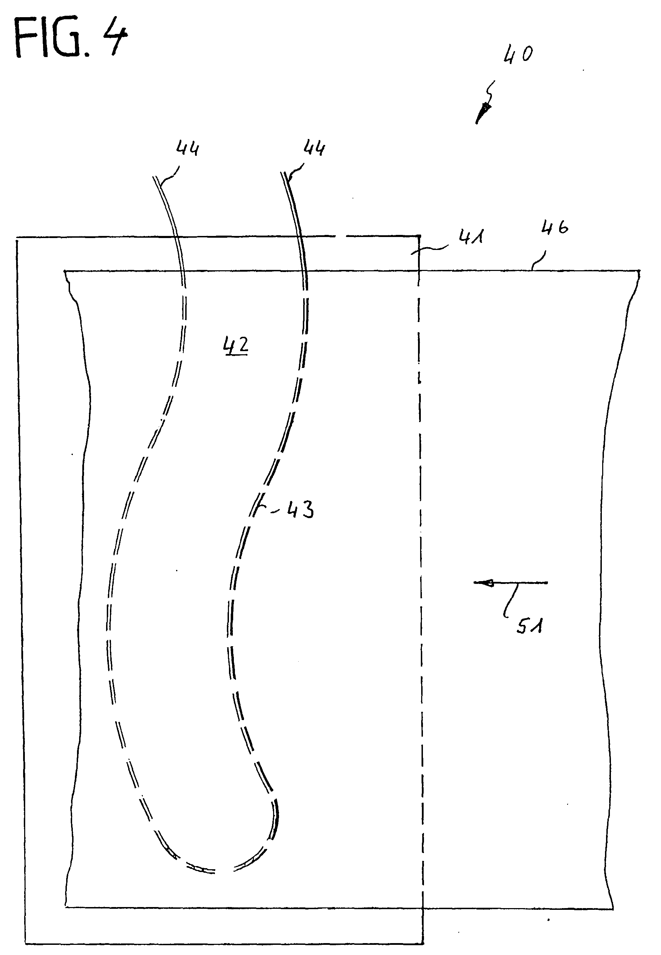

Das künstliche Wursthüllenmaterial 32 der Wursthülle 28 besteht, wie die Figur 3 zeigt, aus einem Kunststoffmaterial 33, beispielsweise aus einem Niederdruckpolyethylen. Dabei sind seitliche Kunststoffränder 34 vorgesehen, die miteinander verschweißt werden können. Über das Kunststoffmaterial 35 kann nach dem Verschweißen ein Stützmaterial 33 gezogen werden.

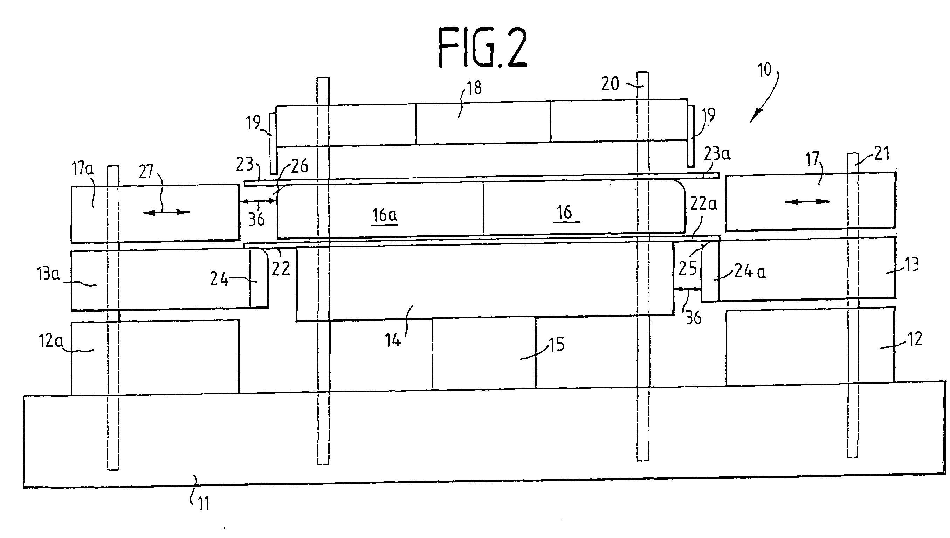

Wie die Figur 2 zeigt, besteht eine Schweißform 10 zur Herstellung einer Wursthülle 28 aus einer Basisplatte 11, auf die einander gegenüberliegend seitliche Formbegrenzungsplatten 12 und 12a aufgelegt sind. Die seitlichen Formbegrenzungsplatten 12 und 12a werden von Führungsstiften 21 relativ zur Basisplatte 11 gehalten.

Auf die seitlichen Formbegrenzungsplatten 12 und 12a sind untere Außenkonturschablonen 13 und 13a und auf diese wiederum obere Außenkonturschablonen 17 und 17a aufgelegt. Die unteren und oberen Außenkonturschablonen 13 und 13a bzw. 17 und 17a sind ebenfalls durch die Führungsstifte 21 gehalten und relativ zur Basisplatte 11 fixiert. Den oberen Außenkonturschablonen 13 und 13a sind mit Schweißenergie beaufschlagbare, innenliegende Schweißbacken 24 und 24a zugeordnet.

Zwischen den Formbegrenzungsplatten 12 und 12a ist eine innere Konturschablone 14 eingelegt, die durch Distanzstücke 15 gegenüber der Basisplatte 11 angehoben ist.

Die innere Konturschablone 14 weist die gleiche Aussenkontur wie die Wursthülle 28 auf. Ebenso weisen die Außenkonturschablonen 13 und 13a bzw. 17 und 17a eine Innenkontur auf, die der Außenkontur der Wursthülle 28 entspricht.

Auf die innere Konturschablone 14 kann eine untere Innenwursthüllenhälfte 22 aufgelegt werden, die mit ihrer Außenseite nach unten weist. Auf die Innenseite der unteren Innenwursthüllenhälfte ist eine Innenschablone 16, 16a aufgelegt, die in Längsrichtung mindestens zweigeteilt ist.

Die unten liegende, untere Innenwursthüllenhälfte 22 steht mit einem seitlichen Überstand 22a über die Innenschablone 16, 16a über und liegt auf inneren Abrundungen 25 der unteren Außenkonturschablonen 13 und 13a auf.

Die Innenschablone 16, 16a liegt mit einem Freiraum 36 gegenüber der oberen Außenkonturschablone 17 bzw. 17a frei. In diesem Freiraum 36 können die seitlichen Überstände 22a der unteren Innenwursthüllenhälfte 22 eingedrückt werden. Danach kann die obere Innenwursthüllenhälfte 23 mit einem seitlichen Überstand 23a auf die Innenschablone 16, 16a aufgelegt werden.

Mittels einer Deckplatte 18, die seitlich mit vertikal überstehenden Rändern 19 versehen ist, werden die seitlichen Überstände 23a der oberen Innenwursthüllenhälfte 23 über Abrundungen 26 der Innenschablone 16, 16a in den Freiraum 36 gedrückt. Die seitlichen Überstände 23a der oberen Innenwursthüllenhälfte 23 weisen dabei nach unten.

Die innere Konturschablone 14, die Innenschablone 16, 16a und die Deckplatte 18 sind dabei mit Führungsstiften 20 gegenüber der Basisplatte 11 fixiert. Nach Entfernen der Distanzstücke 15 kann die innere Konturschablone 14 und die darauf liegende untere Innenwursthüllenhälfte 22 abgesenkt werden. Dabei werden die Schweißbacken 24 und 24a mit Schweißenergie aktiviert und die seitlichen Überstände 22a der unteren Innenwursthüllenhälfte 22 von außen auf die seitlichen Überstände 23a der oberen Innenwursthüllenhälfte 23 geschweißt.

Die Führungstifte 21 können nun entfernt und die Außenkonturschablonen 13, 13a bzw. 17, 17a in Richtung 27 (Doppelpfeil) zusammengefahren werden. Die seitlichen Überstände 22a und 23a werden dabei solange preßgehalten, bis die längsverlaufenden Schweißnähte 29 und 29a fertig sind.

Nach Entfernen der Führungsstifte 20 wird die Innenschablone 16, 16a aus der Wursthülle 28, die aus zwei Innenwursthüllenhälften 22 und 23 zusammengeklebt ist, endseitig herausgezogen. Da die Wursthülle 28 eine naturdarmnahe, gebogene Außenkontur aufweist, ist die Innenschablone 16, 16a in Längsrichtung zweigeteilt. Die einzelnen Innenschablonenteile 16 und 16a können zum Herausziehen übereinandergelegt und aus dem Bereich der Wursthüllenkrümmungen gebracht werden. Das freie Ende der Wursthülle 28 kann nach dem Einfüllen einer Wurstmasse mit einer geklebten oder genähten Quernaht 31 verschlossen werden.

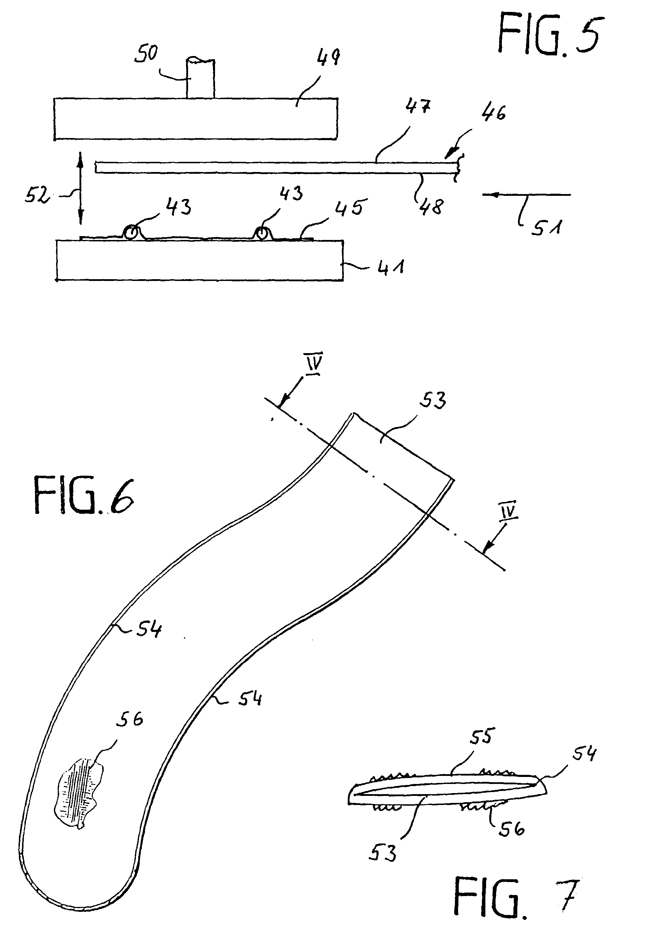

In den Figuren 4 und 5 ist schematisch eine Trenn-Schweiß-Vorrichtung 40 dargestellt, die im wesentlichen aus einer Grundplatte 41 besteht, auf die ein der Außenkontur 42 einer herzustellenden Umhüllung 53 entsprechend geformter Schweißkonturdraht 43 aufgelegt und fixiert ist. Die Grundplatte 41 besteht aus einem Kunststoff, vorzugsweise aus Polyesther. Der Schweißkonturdraht 43 ist mit elektrischen Anschlüssen 44 versehen, die über die Grundplatte 41 überstehen. Über die lektrischen Anschlüsse 44 kann der Schweißkonturdraht 43 mit einer elektrischen Schweißenergie beaufschlagt werden.

Wie die Figur 5 zeigt, ist der Schweißkonturdraht 43 mit einer Abdeckfolie 45 auf der Grundplatte 41 fixiert. Als Abdeckfolie hat sich eine hochtemperaturbeständige Kuststofffolie bewährt. Auf einer Grundplatte 41 können Schweißkonturdrähte 43 für eine Vielzahl von Außenkonturen 42 für Umhüllungen 53 verlegt sein. Die Außenkonturen 42 können dabei gleich oder unterschiedlich sein.

Zur Herstellung eines Formteils, beispielsweise einer Umhüllung 53 für eine Wurst, wie sie in der Figur 6 dargestellt ist, wird eine quasi endlose zu verarbeitende Folienmaterialbahn 46, beispielsweise eine Kunststofffolie, über den Schweißkonturdraht 43 gelegt. Die Folienmaterialbahn 46 besteht aus einer rauchgasdurchlässigen Kunststofffolie. Die Materialstärke ist variabel, sie beträgt ca. 10µm bis 50µm.

Die zu verarbeitende Folienmaterialbahn 46 ist doppelt gelegt und besteht aus einem Obertrum 47 und einem Untertrum 48, die von einem - nicht dargestellten - Coil quasi endlos abgewickelt werden kann.

Nach dem Einlegen der zu verarbeitenden Folienmaterialbahn 46, beispielsweise eine schweißbare Kunststofffolie unterschiedlicher Dicke, kann eine Anpreßplatte 49 mittels einer Absenkvorrichtung 50 in Schließrichtung 52 (Doppelpfeil) gegen die Grundplatte 41 abgesenkt werden.

Der Anpreßdruck der Anpreßplatte 49 ist variabel und kann mit der Schweißenergie, beispielsweise einer elektrischen Energie, die über die elektrischen Anschlüsse 44 in den Schweißkonturdraht 43 geleitet wird, abgestimmt werden.

Durch die Schweißenergie in dem Schweißkonturdraht 43 werden in Abstimmung mit dem Anpreßdruck der Anpreßplatte 49 das Obertrum 47 und das Untertrum 48 der zu verarbeitenden Folienmaterialbahn 46 miteinander verschweißt. Gleichzeitig wird die fertigverschweißte Umhüllung 53 aus der restlichen Folienmaterialbahn 46 abgetrennt.

Nach dem Anheben der Anpreßplatte 49 kann die Folienmaterialbahn 46 in Förderrichtung 52 (Pfeil) weiter gezogen werden und das Verschweißen und Abtrennen der nächsten Umhüllung 53 kann beginnen. Die verbleibenden Reste der Folienmaterialbahn, aus der die Umhüllung 53 herausgetrennt ist, können recycelt werden.

Nach einem anderen Verfahren wird ein computergesteuerter Laser über die doppelt gelegte Kunststofffolienmaterialbahn 46 gefahren, der eine vorprogrammierte Umhüllungsform ausschneidet und gleichzeitig Obertrumm 47 und Untertrumm 48 miteinander verschweißt.

Wie die Figur 6 weiter zeigt, wird die Außenkontur der fertigen Umhüllung 53 von einer umlaufenden Schweißnaht 54 gebildet. Die Schweißnaht 54 entspricht dabei der Form des Schweißkonturdrahtes 43 und ist vor dem Abdecken und Fixieren mit der Abdeckfolie 45 freiformbar. Zugleich mit dem Verschweißen von Obertrum 47 und Untertrum 48 wird die fertiggeschweißte Umhüllung 53 aus der zu verarbeitenden Folienmaterialbahn 46 abgetrennt.

Wie die Figur 7 zeigt, kann die fertige Umhüllung 53, beispielsweise eine Wursthülle, mit einer zusätzlichen Textilumhüllung 55 versehen werden. Auf die Textilumhüllung 55 kann eine Dekoration 56 aufgedruckt sein. Eine ebensolche Dekoration 55 kann auch direkt auf die zu verarbeitende Folienmaterialbahn 46 aufgedruckt sein, wie dies die Figur 6 zeigt.

Die fertige Umhüllung 53 kann mit der Textilumhüllung 55 verklebt sein, um ein einfaches Abziehen zur Verarbeitung bzw. zum Verzehr zu gewährleisten. Ein mit einer derartigen Umhüllung 53 umhülltes Lebensmittel, beispielsweise eine Wurst, ist steril und räucherfähig.

### Bezugszeichen

- 10: Schweißform
- 11: Basisplatte
- 12, 12a: seitliche Formbegrenzungsplatte
- 13, 13a: untere Außenkonturschablone
- 14: innere Konturschablone
- 15: Distanzstück
- 16, 16a: Innenschablone
- 17, 17a: obere Außenkonturschablone
- 18: Druckplatte
- 19: überstehender Vertikalrand
- 20,21: Führungsstift
- 22: untere Innenwursthüllenhälfte
- 22a: seitlicher Überstand
- 23: obere Innenwursthüllenhälfte
- 23a: seitlicher Überstand
- 24, 24a: Schweißbacke
- 25, 26: Abrundung
- 27: Anpreßrichtung
- 28: Innenwursthülle
- 29, 29a: seitlich längsverlaufende Schweißnaht
- 30: Verschluss
- 31: Quernaht
- 32: künstlicheS Wursthüllenmaterial
- 33: Stützmaterial
- 34: Kunststoffrand
- 35: Kunststoffmaterial
- 36: Freiraum
- 40: Trenn-Schweiß-Vorrichtung
- 41: Grundplatte
- 42: Außenkontur
- 43: Schweißkonturdraht
- 44: elektrischer Anschluß
- 45: Abdeckfolie
- 46: Folienmaterialbahn
- 47: Obertrum
- 48: Untertrum
- 49: Anpreßplatte
- 50: Absenkvorrichtung
- 51: Förderrichtung
- 52: Schließrichtung
- 53: fertiggeschweißte Umhüllung
- 54: Schweißnaht
- 55: Textilumhüllung
- 56: gedruckte Dekoration

## Patentansprüche

1. Wursthülle aus einem künstlichen Wursthüllenmaterial dadurch gekennzeichnet, dass als Wursthüllenmaterial (32) ein gas- und sauerstoffdurchlässiges weiches Kunststoffmaterial (35) verwendet wird, das eine unregelmässig gekrümmte Wurstform (28) mit geschweißten Längsnähten (29, 29a) aufweist.

2. Wursthülle nach Anspruch 1, dadurch gekennzeichnet, dass als gas- und sauerstoffdurchlässiges Kunststoffmaterial ein Niederdruckpolyethylen (35) verwendet wird, das mit einem Stützmaterial (33) umgeben ist, welches die gleiche Außenkontur aufweist, wobei das Kunststoffmaterial (35) nachträglich in das Stützmaterial (33) eingelegt ist.

3. Wursthülle nach den Ansprüchen 1 und 2, dadurch gekennzeichnet, dass sie aus zwei naturdarmförmig unregelmäßig gekrümmten Innenwursthüllenhälften (22, 23) besteht, die in seitlichen längsverlaufenden Schweißnähten (29, 29a) miteinander verschweißt sind.

4. Vorrichtung zur Herstellung einer Wursthülle nach den Ansprüchen 1 bis 3, gekennzeichnet durch eine innere Konturschablone (14) zur Aufnahme einer unteren Innenwursthüllenhälfte (22), eine auf die untere Innenwursthüllenhälfte (22) auflegbare Innenschablone (16, 16a), eine obere Innenwursthüllenhälfte (23), die mit seitlichen Überständen (22a, 23a) über die innere Konturschablone (14) übersteht, eine auf die obere Innenwursthüllenhälfte (23) auflegbare Deckplatte (18) und durch eine Außenkonturschablone (13, 13a), die mit gegen die Innenschablone (16, 16a) verfahrbaren Schweißbacken (24, 24a) versehen ist, wobei die Deckplatte (18) mit einem rundlumlaufenden Rand (19) versehen ist.

5. Vorrichtung zur Herstellung einer eine unregelmäßige Außenkontur aufweisenden Umhüllung für Lebensmittel, gekennzeichnet durch einen die Außenkontur (42) der Umhüllung (53) aufweisenden mit Schweißenergie beaufschlagbaren Schweißkonturdraht (43), der auf eine Grundplatte (41) aufgelegt ist, über den ein aus einem Obertrum (47) und einem Untertrum (48) bestehende quasi endlose Folienmaterialbahn (46) spannbar und mit einer Anpreßplatte (49) auf den Schweißkonturdraht (43) anpressbar ist.

6. Vorrichtung nach Anspruch 5, dadurch gekennzeichnet, daß der Schweißkonturdraht (43) eine geschlossene Außenkontur (42) bildet und auf der Grundplatte (41) mit einer Abdeckfolie (45) überdeckt ist, wobei die Grundplatte (41) eben ist und der Schweißkonturdraht (43) elektrische Anschlüsse (44) aufweist, die von der Grundplatte (41) weggeführt sind.

7. Vorrichtung nach den Ansprüchen 5 und 6, dadurch gekennzeichnet, daß der Schweißkonturdraht (43) über die elektrischen Anschlüsse (44) mit elektrischer Energie beaufschlagbar ist und der Schweißkonturdraht (43) mit einer variablen Stromstärke beaufschlagbar ist.

8. Vorrichtung nach den Ansprüchen 5 bis 7, dadurch gekennzeichnet, daß auf einer Grundplatte (41) mehrere voneinander getrennte Umhüllungsaußenkonturen (42) bildende Schweißkonturdrähte (43) angeordnet sind.

9. Vorrichtung nach den Ansprüchen 5 bis 8, dadurch gekennzeichnet, daß die Anpreßplatte (49) mit einem variablen Anpreßdruck die zu verarbeitende Folienmaterialbahn (46) auf die mit Schweißenergie beaufschlagten Schweißkonturdrähte (43) preßt.

10. Verfahren zur Herstellung einer Wursthülle nach den Ansprüchen 1 bis 3, insbesondere mittels einer Vorrichtung nach Anspruch 4, gekennzeichnet durch die folgenden Verfahrensschritte:
- auf eine innere Konturschablone, die die Außenkontur einer weichen Innenwursthülle aufweist, wird mit einem seitlichen Überstand eine untere Innenwursthüllenhälfte aufgelegt,
- auf die untere Innenwursthüllenhälfte wird eine Innenschablone aufgelegt, die in Längsrichtung mindestens zweigeteilt ist,
- auf die Innenschablone wird mit einem seitlichen Überstand eine obere Innenwursthüllenhälfte aufgelegt,
- die innere Konturschablone wird abgesenkt, wobei die seitlichen Überstände der unteren Innenwursthüllenhälfte und die seitlichen Überstände der oberen Innenwursthüllenhälfte gegeneinander gelegt werden,
- die Außenkonturschablonen werden zusammen gefahren und die Schweißbacken mit Schweißenergie beaufschlagt, wobei die seitlichen Überstände der oberen Innenwursthüllenhälfte und die seitlichen Überstände der unteren Innenwursthüllenhälfte miteinander verschweißt werden,
- nach dem Verschweißen wird die Form geöffnet und die Innenschablone endseitig aus der zusammengeschweißten Wursthülle gezogen,
- die weiche Innenwursthülle wird in eine feste Stützfolie gleicher Außenkontur eingezogen.

11. Verfahren zur Herstellung einer formgebenden Umhüllung für Lebensmittel, mit einer unregelmäßigen äußeren Kontur, insbesondere mit einer Vorrichtung nach den Ansprüchen 5 bis 8, dadurch gekennzeichnet, daß ein quasi endloses doppeltgelegtes, schweißbares Umhüllungsmaterial über eine mit Schweißenergie beaufschlagbare Umhüllungskontur gelegt und mit Anpreßmitteln preßgehalten wird, eine Schweißenergie durch die Umhüllungskontur geleitet wird, das Umhüllungsmaterial im Bereich der Umhüllungskontur zu einem Umhüllungsformteil verschweißt wird und das verschweißte Umhüllungsformteil aus dem verbleibenden Umhüllungsmaterial abgetrennt wird.

12. Verfahren zur Herstellung einer formgebenden Umhüllung für Lebensmittel, mit einer unregelmäßigen äußeren Kontur, dadurch gekennzeichnet, daß ein computergesteuerter Laser über die doppelt gelegte Kunststofffolienmaterialbahn gefahren, der eine vorprogrammierte Umhüllungsform ausschneidet und gleichzeitig das Obertrum und Untertrum der Folienmaterialbahn miteinander verschweißt.
